# FASCICULE DE BREVET EUROPEEN

(11) **EP 4 320 471 B1**
(45) Date de publication et mention de la délivrance du brevet: **01.10.2025**
(21) Numéro de dépôt: 22718249.0
(22) Date de dépôt: 23.03.2022
(51) Int. Cl.: G02B 6/12, G02B 6/13

(54) **PROCÉDÉ DE FABRICATION D'UN DISPOSITIF PHOTONIQUE POURVU D'AU MOINS DEUX PUCES PHOTONIQUES ET DISPOSITIF PHOTONIQUE**
VERFAHREN ZUR HERSTELLUNG EINER PHOTONISCHEN VORRICHTUNG MIT MINDESTENS ZWEI PHOTONISCHEN CHIPS UND PHOTONISCHE VORRICHTUNG
METHOD FOR MANUFACTURING A PHOTONIC DEVICE PROVIDED WITH AT LEAST TWO PHOTONIC CHIPS, AND PHOTONIC DEVICE

(30) Priorité: 07.04.2021 FR 2103538
(43) Date de publication de la demande: 14.02.2024
(73) Titulaire: Scintil Photonics, 38040 Grenoble Cedex 9 (FR)
(72) Inventeur: MENEZO, Sylvie, 38040 Grenoble Cedex 9 (FR)
(74) Mandataire: IP Trust
(86) Numéro de dépôt international: PCT/FR2022/050538
(87) Numéro de publication internationale: WO 2022/214748

(56) Documents cités:
- EP-A1- 3 764 136
- FR-A1- 3 067 866
- US-A1- 2004 081 399
- US-A1- 2013 330 035
- US-A1- 2017 115 458
- ROELKENS GUNTHER ET AL: "Integration of InP/InGaAsP photodetectors onto silicon-on-insulator waveguide circuits References and Links", vol. 220, no. 15, 12 December 2005 (2005-12-12), pages 1328 - 1330, XP055873330, Retrieved from the Internet <URL:https://www.photonics.intec.ugent.be/download/pub_1960.pdf> [retrieved on 20211216]

## Description

### DOMAINE DE L'INVENTION

Le domaine de la présente invention est celui des composants photoniques intégrés. Plus particulièrement, la présente invention se rapporte à la problématique de couplage optique de composants photoniques au sein d'un dispositif photonique. Notamment, la présente invention propose un procédé de co-intégration et de couplage optique d'une pluralité de composants photoniques sur un dispositif. En particulier, la présente invention propose un procédé permettant d'intégrer deux composants photoniques à un dispositif selon deux modes de couplages différents.

### ARRIERE PLAN TECHNOLOGIQUE DE L'INVENTION

La co-intégration de composants photoniques avec des dispositifs micro-électroniques a pris un essor considérable au cours des deux dernières décennies notamment pour répondre à de nouveaux besoins des domaines des communications et de l'optique quantique.

En effet, ces composants photoniques, qui sont généralement faits de matériaux semi-conducteurs III-V dont les performances ne sont plus à démontrer, peuvent être directement intégrés sur des substrats ou supports de silicium supportant les dispositifs micro-électroniques pour former des dispositifs monolithiques. Notamment, leur intégration met en œuvre des techniques éprouvées de l'industrie de la micro-électronique telles que des étapes de collage, de polissage, et encore de gravure.

La communication entre composants photoniques et composants micro-électroniques d'un même dispositif nécessite toutefois de prévoir la formation de moyens de couplage optique et/ou de guidage d'un rayonnement lumineux susceptible d'être émis ou reçu par les composants photoniques.

A cet égard, différents types de couplages optiques, dépendamment des applications visées ou de la nature des composants photoniques, peuvent être considérés. Parmi ces derniers, on peut citer le couplage surfacique, le couplage par ondes évanescentes ou adiabatique, et enfin le couplage bout-à-bout (« Butt Coupling », selon la terminologie Anglo-Saxonne).

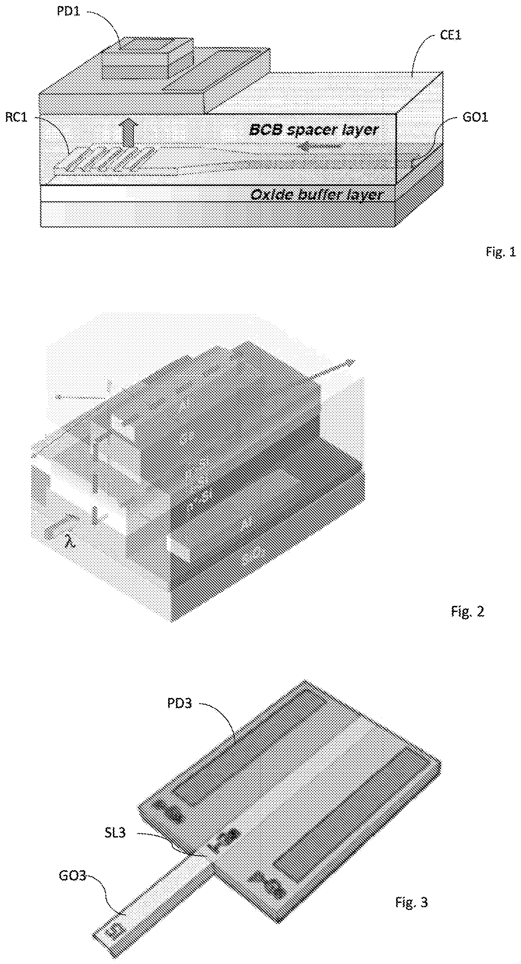

Ainsi, la figure 1, reprenant la figure 2 du document [1] cité à la fin de la description, est une illustration d'un couplage surfacique (dit « par le bas ») entre un guide d'onde GO1 de silicium avec un photodétecteur PD1 fait de matériaux semi-conducteurs III-V.

En particulier, sur cette figure 1, le guide d'onde GO1, encapsulé dans une couche d'encapsulation CE1 (faite de résine « BCB »), est terminé, selon une de ses extrémités, par un réseau de couplage RC1 (« Grating Coupler », selon la terminologie Anglo-Saxonne).

Le photodétecteur PD1 repose, par une face photosensible, sur la couche d'encapsulation et à l'aplomb du réseau de couplage RC1. Un tel agencement permet à un rayonnement guidé par le guide d'onde GO1, lorsqu'il atteint le réseau de couplage RC1, d'être transmis au photodétecteur PD1 par sa face photosensible (ou plus généralement « sa face de couplage »). Un tel mode de couplage permet de considérer des milieux d'indices différents. Plus particulièrement, le réseau de couplage RC1 et la face de couplage du photodétecteur PD1 peut être faits de matériaux d'indices différents.

Le document [2], cité la fin de la description, propose un dispositif photonique pourvu d'une photodiode à avalanche (« APD » ou « Avalanche Photodiode » selon la terminologie Anglo-Saxonne), optiquement couplée par ondes évanescentes ou adiabatique avec un guide d'onde en silicium (figure 2 qui est une reprise de la figure 2(a) du document [2]). A cette fin, la photodiode à avalanche est disposée à l'aplomb et à proximité du guide d'onde de manière à permettre un couplage effectif.

Enfin, et tel que décrit dans le document [3] cité à la fin de la description, le couplage bout-à-bout met en œuvre un couplage sur un flanc ou une surface latérale SL3 du composant photonique PD3 considéré. En particulier, tel que représenté à la figure 3 (figure 2(a) reprise du document [3]), le composant photonique DP3 est configuré pour recevoir un rayonnement lumineux, guidé par un guide d'onde GO3.

Le document [5] cité à la fin de la description espose une méthode de conception d'un transformateur adiabatique entre deux guides d'onde.

Le document [6] cité à la fin de la description propose la mise en œuvre d'un couplage optique au moyen d'un réseau de couplage entre un guide d'onde et un capteur.

Chacun des couplages décrits ci-avant est ainsi mis en œuvre pour répondre à une spécificité du composant photonique, plus particulièrement une spécificité relative à sa forme et/ou sa fonction. Ainsi, la considération de l'intégration de différents types de composants photoniques peut impliquer des modes de couplage optique différents d'un composant à l'autre.

Toutefois, chaque mode de couplage répond à des critères bien précis. Notamment, un couplage surfacique impose généralement une distance minimale, d'au moins 200 nm, entre le réseau de couplage et le composant photonique afin d'éviter un couplage par ondes évanescentes ou adiabatique. Par ailleurs, la face de couplage présente en général un coefficient de réflexion non nul qui est susceptible de limiter l'efficacité du couplage entre le guide d'onde et le composant photonique. En effet, un rayonnement issu du guide d'onde et couplé au composant photonique via le réseau de couplage est susceptible d'être, au moins partiellement, réfléchi par la face de couplage et être réinjecter dans le guide d'onde.

Pour sa part, le couplage par ondes évanescentes ou adiabatique requiert une proximité, et notamment une distance inférieure ou égale à 150 nm, entre le composant photonique et le guide d'onde avec lequel il est optiquement couplé. Par ailleurs, ce couplage implique également que les indices de réfraction des matériaux formant le guide d'onde et le composant photonique soient proches.

En d'autres termes, la considération d'un couplage surfacique et d'un couplage par ondes évanescentes ou adiabatique au sein d'un dispositif photonique pour deux composants photoniques différents est source de complexification du procédé permettant de fabriquer ledit dispositif. Notamment, cette complexification se caractérise par un nombre d'étapes de formation et/ou de report des composants accru.

Un but de la présente invention est donc de proposer un procédé de fabrication d'un dispositif photonique qui met en œuvre un couplage par ondes évanescentes ou adiabatique et un couplage surfacique avec, respectivement, un premier composant photonique et un deuxième composant photonique.

Un autre but de la présente invention est également de proposer un procédé permettant d'améliorer le couplage surfacique.

### BREVE DESCRIPTION DE L'INVENTION

Les buts de la présente invention sont, au moins en partie, atteints par un procédé de fabrication selon la revendication 1.

Selon un mode de mise en œuvre, le substrat de semi-conducteur sur isolant comprend, d'une face arrière vers une face avant, un substrat initial, une couche d'oxyde enterré et une couche de semi-conducteur, la couche d'oxyde enterré, formant pour partie la couche de couplage, et présentant avantageusement une épaisseur égale à la première distance D1.

Selon un mode de mise en œuvre, la formation de la couche de couplage comprend une sous-étape a1) de gravure partielle de la couche de semi-conducteur de manière à former l'au moins un premier guide d'onde.

Selon un mode de mise en œuvre, la formation de la couche de couplage comprend une sous-étape a2) de formation d'une première couche gaine, avantageusement en dioxyde de silicium, en recouvrement de la face avant du substrat de semi-conducteur sur isolant et destinée à encapsuler le premier guide d'onde.

Selon un mode de mise en œuvre, la formation de la couche de couplage comprend une sous-étape a3) de formation du deuxième guide d'onde et du premier réseau de couplage sur la première couche gaine, avantageusement l'épaisseur de la première couche gaine est ajustée de sorte que le deuxième guide d'onde et le premier réseau de couplage soient à une distance d'une interface, formée entre le substrat initial et la couche d'oxyde enterré, égale à la deuxième distance D2.

Selon un mode de mise en œuvre, la formation de la couche de couplage comprend une sous-étape a4) de formation d'une deuxième couche gaine, avantageusement en dioxyde de silicium, en recouvrement de la première couche gaine et destinée à encapsuler le deuxième guide d'onde et le premier réseau de couplage.

Selon un mode de mise en œuvre, le report de la couche couplage comprend l'assemblage de la face d'assemblage et de la face principale du substrat final puis le retrait du substrat initial de manière à transférer la couche de couplage sur la face principale, le retrait du substrat initial comprend avantageusement un amincissement mécanique.

Selon un mode de mise en œuvre, l'étape b) comprend les sous-étapes suivantes :
b11) une étape de formation, par épitaxie, du premier empilement photonique sur une face, dite face germe, d'un premier substrat germe ;
b12) une étape de découpe pour former des premières sections qui comprennent chacune une première portion du premier substrat germe sur laquelle repose une première vignette formée du premier empilement photonique ;
b13) une étape d'assemblage des premières vignettes sur la face de couplage ;
b14) une étape de retrait de la première portion à l'issue de l'étape c13) de manière à transférer la première vignette sur la face de couplage.

De manière équivalente, la formation du deuxième empilement sur la face de couplage peut comprendre les étapes suivantes :
c21) une étape de formation, par épitaxie, du deuxième empilement photonique sur une face, dite face germe, d'un deuxième substrat germe ;
c22) une étape de découpe pour former des deuxièmes sections qui comprennent chacune une deuxième portion du deuxième substrat germe sur laquelle repose une deuxième vignette formée du deuxième empilement photonique ;
c23) une étape d'assemblage des deuxièmes vignettes sur la face de couplage ;
c24) une étape de retrait de la deuxième portion à l'issue de l'étape c23) de manière à transférer la deuxième vignette sur la face de couplage.

Selon un mode de mise en œuvre, l'étape b) comprend les sous-étapes suivantes :
b21) une étape de formation, par épitaxie, du deuxième empilement photonique sur une face, dite face germe, d'un deuxième substrat germe ;
b22) une étape de découpe pour former des deuxièmes sections qui comprennent chacune une deuxième portion du deuxième substrat germe sur laquelle repose une deuxième vignette formée du deuxième empilement photonique ;
b23) une étape d'assemblage des deuxièmes vignettes sur la face de couplage ;
b24) une étape de retrait de la deuxième portion à l'issue de l'étape c23) de manière à transférer la deuxième vignette sur la face de couplage.

Selon un mode de mise en œuvre, le premier et le deuxième empilement photonique comprennent chacun un empilement de puits quantiques intercalés entre une couche inférieure et une couche supérieure, la couche inférieure reposant sur la couche de couplage.

Selon un mode de mise en œuvre, le premier empilement photonique et le deuxième empilement photonique sont formés par épitaxie avant d'être reportés sur la face de couplage.

Selon un mode de mise en œuvre, l'au moins un premier composant photonique comprend un laser.

Selon un mode de mise en œuvre, l'au moins un deuxième composant photonique comprend une photodiode à avalanche, avantageusement, l'interface formée entre le deuxième empilement photonique et la couche de couplage est dépourvue de couche antireflet.

Selon un mode de mise en œuvre, un élément réflectif est formé dans la couche de couplage, et est aménagé de sorte que le premier réseau de couplage se trouve intercalé entre ledit élément réflectif et l'au moins un deuxième composant photonique.

Selon un mode de mise en œuvre, un autre élément réflectif est formé dans la couche de couplage, et est aménagé de sorte que le deuxième réseau de couplage se trouve intercalé entre ledit élément réflectif et la face de couplage.

L'invention concerne également un dispositif photonique selon la revendication 11.

Selon un mode de mise en œuvre, le deuxième composant photonique comprend une photodiode à avalanche, avantageusement l'interface formée entre le deuxième empilement photonique et la couche de couplage est dépourvue de couche antireflet.

Selon un mode de mise en œuvre, ledit dispositif comprend en outre un élément réflectif est formé dans la couche de couplage, et agencé de sorte que le premier réseau de couplage se trouve intercalé entre ledit élément réflectif et l'au moins un deuxième composant photonique.

### BREVE DESCRIPTION DES DESSINS

D'autres caractéristiques et avantages de l'invention ressortiront de la description détaillée qui va suivre en référence aux figures annexées sur lesquelles :
[Fig.1] La figure 1, tirée du document [1] cité à la fin de la description, est une illustration, en perspective, du couplage surfacique d'un photodétecteur avec un guide d'onde terminé par un premier réseau de couplage ;
[Fig.2] La figure 2, tirée du document [2] cité à la fin de la description, est une illustration, en perspective, du couplage par ondes évanescente ou adiabatique d'une photodiode à avalanche avec un guide d'onde ;
[Fig.3] La figure 3 reprend la figure 2(a) du document [3] cité à la fin de la description, cette figure représente notamment, selon une vue en perspective, un couplage bout-à-bout entre un dispositif photonique et un guide d'onde, connue de l'état de la technique ;
[Fig.4] La figure 4 est une représentation schématique, selon un plan de coupe perpendiculaire à la face principale, d'une structure support fournie lors de l'étape a) du procédé selon la présente invention ;
[FIG.5] La figure 5 est une représentation schématique de la structure support de la figure 4 selon un autre plan de coupe perpendiculaire à la face principale et qui comprend un axe d'élongation du deuxième guide d'onde, la figure 5 permet notamment d'illustrer les réseaux de couplage terminant le deuxième guide d'onde selon chacune de ses extrémités ;
[FIG.6] La figure 6 est une représentation schématique d'un substrat de semi-conducteur sur isolant susceptible d'être mis en œuvre pour la formation de la couche de couplage ;
[FIG.7] La figure 7 est une représentation schématique de la sous-étape a1) de formation d'un premier guide d'onde sur le substrat de semi-conducteur sur isolant de la figure 6 ;
[FIG.8] La figure 8 est une représentation schématique de la sous-étape a2) de formation d'une première couche gaine en recouvrement de la face avant du substrat de semi-conducteur sur isolant et destinée à encapsuler le premier guide d'onde 330 ;
[FIG.9] La figure 9 est une représentation schématique de la sous-étape a3) de formation du deuxième guide d'onde et du premier réseau de couplage sur la première couche gaine ;
[FIG.10a] La figure 10a est une représentation schématique de la sous-étape a4) de formation d'une deuxième couche gaine en recouvrement de la première couche gaine et destinée à encapsuler le deuxième guide d'onde et le premier réseau de couplage ;
[FIG.10b] La figure 10b est une représentation schématique de la sous-étape a4) de formation d'une deuxième couche gaine en recouvrement de la première couche gaine et destinée à encapsuler le deuxième guide d'onde et le premier réseau de couplage, l'étape a4) dans le cadre de cette représentation comprend également la formation des deux éléments réflecteurs ;
[FIG. 11] La figure 11 est une représentation schématique d'une étape d'assemblage de la face d'assemblage de la couche de couplage avec la face principale du substrat final ;
[FIG.12] La figure 12 est une représentation schématique d'une étape de retrait du substrat initial après exécution de l'assemblage illustré à la figure 11, de manière à transférer la couche de couplage sur la face principale du substrat final ;
[FIG.13] La figure 13 est une représentation schématique d'une étape de report d'un premier bloc et d'un deuxième bloc sur la face de couplage ;
[FIG. 14] La figure 14 est une photographie, par la face de couplage, de premiers blocs et de deuxièmes blocs reportés sut ladite face de couplage ;
[FIG.15] La figure 15 est une représentation schématique selon un plan de coupe perpendiculaire à la face principale, de la structure support sur laquelle sont formés le premier composant photonique et le deuxième composant photonique à l'issue de l'exécution de l'étape c) ;
[FIG.16] La figure 16 est une représentation schématique selon un plan de coupe selon un plan de coupe perpendiculaire à la face principale, de la structure support sur laquelle sont formés le premier composant photonique et le deuxième composant, le premier composant photonique et le deuxième composant photonique étant encapsulés par une couche d'encapsulation ;
[FIG. 17] La figure 17 est une représentation schématique selon un plan de coupe selon un plan de coupe perpendiculaire à la face principale, et sur laquelle des contacts électriques permettant le contrôle électrique du premier composant photonique et du deuxième composant photonique sont représentés ;
[FIG.18] La figure 18 est une représentation schématique illustrant le couplage entre le deuxième composant photonique et le premier réseau de couplage ;
[FIG.19] La figure 19 est une représentation schématique du premier composant photonique en couplage adiabatique/évanescent selon un plan de coupe parallèle au plan (0, y, z).

### DESCRIPTION DETAILLEE DE L'INVENTION

La présente invention concerne un procédé de fabrication d'un dispositif photonique. Notamment, le procédé selon la présente invention permet d'envisager l'intégration, au sein d'un même dispositif photonique, de plusieurs composants photoniques couplés audit dispositif de manières différentes.

En particulier, la présente invention permet d'intégrer, au sein d'un dispositif photonique, un premier composant photonique, couplé audit dispositif de manière évanescente ou adiabatique, et un deuxième composant photonique couplé audit dispositif au moyen d'un réseau de couplage.

A cette fin, le procédé comprend en particulier les étapes successives suivantes :
a) une étape de fourniture d'une structure support qui comprend une couche de couplage pourvue d'une face de couplage et d'une face d'assemblage, opposée à la face de couplage, la couche de couplage reposant, par sa face d'assemblage, sur une face principale d'un substrat final, la couche de couplage comprenant au moins un premier guide d'onde et au moins un deuxième guide d'onde, terminé par une de ses extrémités par un réseau de couplage, le premier guide d'onde et le réseau de couplage comprenant un matériau monocristallin, le premier et le deuxième guide d'onde étant distants de la face de couplage, respectivement, d'une première distance D1 et d'une deuxième distance D2, supérieure à la première distance D1, la fourniture de la structure support comprenant la formation de la couche de couplage à partir d'un substrat de semi-conducteur sur isolant, puis le report de la couche de couplage sur la face principale du substrat final ;
b) une étape de report, sur la face de couplage, d'au moins un premier et d'au moins un deuxième bloc faits, respectivement, d'un premier et d'un deuxième empilement photonique ;
c) une étape de formation à partir du premier bloc et du deuxième bloc, respectivement, d'un premier et d'un deuxième composant photonique optiquement couplés, respectivement, avec l'au moins un premier guide d'onde de manière évanescente ou adiabatique, et avec l'au moins un deuxième guide d'onde via le réseau de couplage.

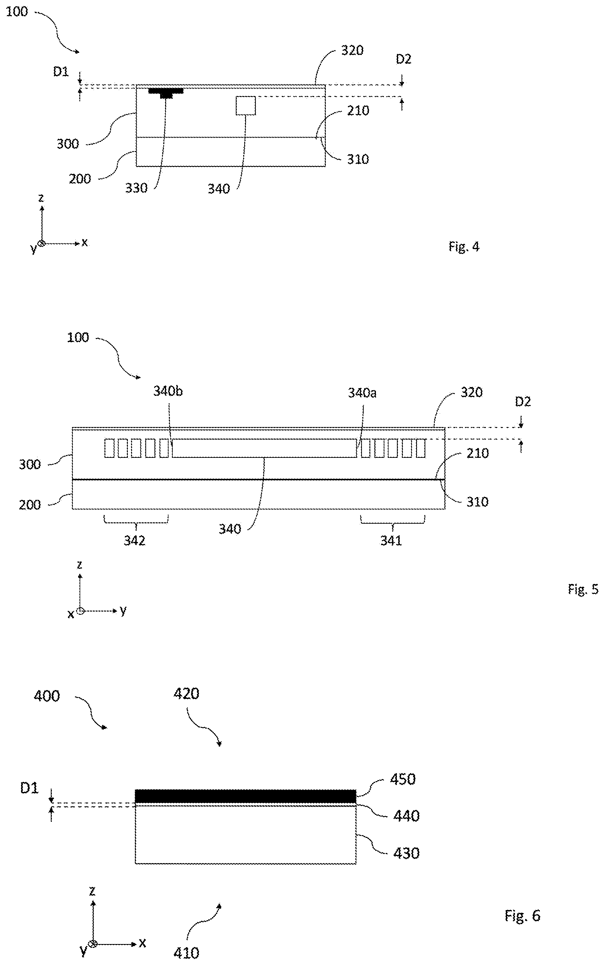

Ainsi, la figure 4 représente, dans un repère (x, y, z) orthonormé, une structure support fournie lors de l'exécution de l'étape a).

En particulier, la structure support comprend un substrat final 200 pourvu d'une face principale 210 sur laquelle repose, par sa face d'assemblage 310, une couche de couplage 300. La couche de couplage 300 comprend également une face de couplage 320, opposée à la face d'assemblage 310.

Dans la description, et à moins que cela ne soit précisé autrement, les faces et les couches s'étendent parallèlement au plan (x, y) et sont donc perpendiculaires à la direction z.

Le substrat final 200 peut comprendre tout type de matériaux. Notamment, le substrat final 200 peut comprendre un matériau semi-conducteur. A cet égard, le matériau semi-conducteur peut comprendre du silicium, du nitrure d'aluminium, du germanium, ou encore un alliage de silicium germanium.

De manière alternative, le substrat final 200 peut comprendre un matériau isolant. Par exemple, le matériau isolant peut comprendre de verre.

La couche de couplage 300 comprend au moins un premier guide d'onde 330 et au moins un deuxième guide d'onde 340. En particulier, le premier guide d'onde 330 est distant de la face de couplage 320 d'une première distance D1. De manière équivalente, le deuxième guide d'onde 340 est distant de la face de couplage 320 d'une deuxième distance D2 supérieure à la première distance D1 (figure 4 et figure 5).

Il est entendu que le premier guide d'onde 330 et le deuxième guide d'onde 340 s'étendent chacun dans un plan parallèle au plan (x, y), et restent donc à une distance constante de la face de couplage 320.

Il est également entendu que le premier guide d'onde 330 et le deuxième guide d'onde 340 ne s'étendent pas nécessairement selon les mêmes directions.

Le deuxième guide d'onde 340 est terminé selon une de ses extrémités 340a par un premier réseau de couplage optique 341 (figure 5). Le premier réseau de couplage optique 341 peut être fait du même matériau que le premier guide d'onde 340. Il est également entendu, sans qu'il soit nécessaire de le préciser, que le premier réseau de couplage 340 est également distant de la face de couplage 320 de la deuxième distance D2.

De manière équivalente et selon l'invention, le deuxième guide d'onde 340 est terminé selon une autre de ses extrémités 340b par un deuxième réseau de couplage optique 342 (figure 5). Le deuxième réseau de couplage optique 342 peut être fait du même matériau que le deuxième guide d'onde 340. Il est également entendu, sans qu'il soit nécessaire de le préciser, que le deuxième réseau de couplage 342 est également distant de la face de couplage 320 de la deuxième distance D2. De manière alternative et non revendiquée, le deuxième guide d'onde peut être terminé à son autre extrémité par un coupleur par la tranche. La tranche est, dans le cadre de la présente invention, défini comme un contour reliant la face d'assemblage et la face de couplage.

Aussi, et ce tout au long de l'énoncé de la présente invention, la simple mention de deuxième guide d'onde 340 fait référence audit deuxième guide d'onde mais également au premier réseau de couplage ainsi qu'au deuxième réseau de couplage.

Le premier guide d'onde 330 comprend un matériau monocristallin, et plus particulièrement du silicium monocristallin.

De manière avantageuse, le deuxième guide d'onde 340 peut comprendre du nitrure de silicium. L'invention n'est toutefois pas limitée à la mise en œuvre de ce seul matériau.

L'étape a) de fourniture de la structure support comprend :
- la formation de la couche de couplage 300 à partir d'un substrat de semi-conducteur sur isolant 400; et
- le report de la couche couplage 300 sur la face principale 210 du substrat final 200.

Tel qu'illustré à la figure 6, le substrat de semi-conducteur sur isolant 400 comprend, d'une face arrière 410 vers une face avant 420, un substrat initial 430, une couche d'oxyde enterré 440 et une couche de semi-conducteur 450. La couche de semi-conducteur comprend un matériau monocristallin.

Il apparaîtra clairement dans la suite de l'énoncé que la couche d'oxyde enterré 440 est destinée à former, au moins pour partie, la couche de couplage 300.

Par ailleurs, la couche d'oxyde enterré 440 peut avantageusement présenter une épaisseur égale à la première distance D1.

Le substrat initial 430 peut comprendre un matériau semi-conducteur, un matériau isolant, ou encore un matériau conducteur.

Notamment, le substrat initial 430 peut comprendre du silicium.

La couche d'oxyde enterrée 440 peut comprendre du dioxyde de silicium.

La couche de semi-conducteur 450 peut comprendre du silicium.

L'invention ne doit toutefois pas être limitée à ces seuls matériaux, et l'homme du métier, en fonction des applications visées, pourra mettre en œuvre tout autre matériau susceptible de convenir.

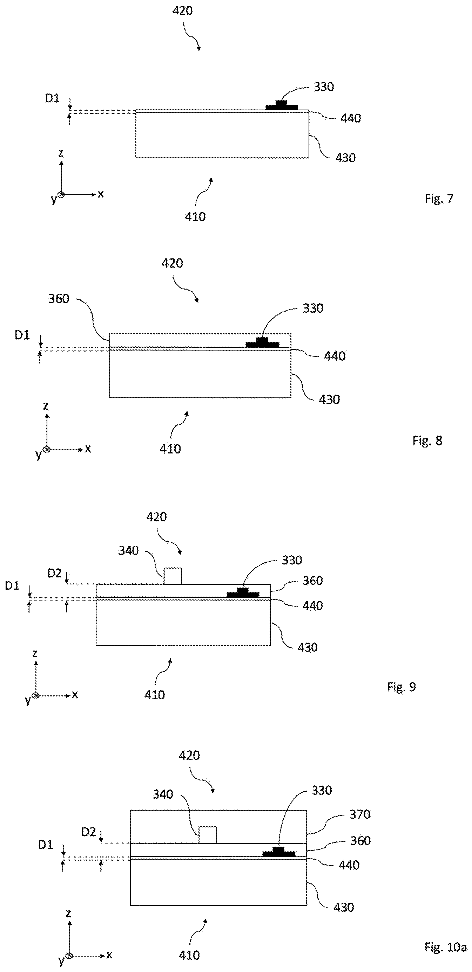

La formation de la couche de couplage 300 à partir du substrat de semi-conducteur sur isolant 400 peut comprendre les sous-étapes suivantes :
- une sous-étape a1) de gravure partielle de la couche de semi-conducteur 450 de manière à former l'au moins un premier guide d'onde 330 (figure 7) ;
- une sous-étape a2) de formation d'une première couche gaine 360 en recouvrement de la face avant 420 du substrat de semi-conducteur sur isolant 400 et destinée à encapsuler le premier guide d'onde 330 (figure 8), la première couche gaine peut, par exemple, comprendre du SiO₂ ;
- une sous-étape a3) de formation du deuxième guide d'onde 340 et du premier réseau de couplage 341 et du deuxième réseau de couplage 342 sur la première couche gaine 360 (figure 9) ;
- une sous-étape a4) de formation d'une deuxième couche gaine 370 en recouvrement de la première couche gaine 360 et destinée à encapsuler le deuxième guide d'onde 330 et le premier réseau de couplage 340 (figure 10a). La deuxième couche gaine 370 peut, par exemple, comprendre du SiO₂.

La sous-étape a1) peut mettre en œuvre une combinaison d'étapes de photolithographie et de gravure. Notamment, une étape de photolithographie permet de définir un motif, et plus particulièrement le motif associé au premier guide d'onde 330 sur la couche de semi-conducteur 450, tandis qu'une étape de gravure permet de former ledit premier guide d'onde 330 à partir du motif défini lors de l'étape de photolithographie. Ces aspects, bien connus de l'homme du métier, ne sont pas détaillés dans la présente invention.

La formation de la première couche gaine 360 lors de l'exécution de la sous-étape a2) peut mettre en œuvre une technique de dépôt de couches. Notamment, la première couche gaine 360 peut être déposée par une technique de dépôt en phase vapeur (« CVD » ou « Chemical Vapor Deposition » selon la terminologie Anglo-Saxonne) et plus particulièrement une technique de dépôt en phase vapeur à basse pression (« LPVCD » ou « Low Pressure Chemical Vapor Deposition » selon la terminologie Anglo-Saxonne), ou encore une technique de dépôt en phase vapeur activée par plasma (« PEVCD » ou « Plasma Enhanced Chemical Vapor Deposition » selon la terminologie Anglo-Saxonne). De manière alternative, la première couche gaine 360 peut être déposée par une technique de dépôt physique en phase vapeur (« PVD » ou « Physical Vapor deposition » selon la terminologie Anglo-Saxonne).

Enfin, cette sous-étape a2) peut également mettre en œuvre un polissage (notamment un polissage mécano-chimique) destiné à ajuster l'épaisseur de la première couche gaine 360. La première couche gaine 360 peut comprendre du dioxyde de silicium.

La formation du deuxième guide d'onde 340, lors de l'exécution de la sous étape a3), peut mettre en œuvre une combinaison d'étapes de dépôt de couche, de photolithographie et de gravure.

Notamment, la formation du deuxième guide d'onde 340 peut, dans un premier temps, comprendre la formation d'une couche guide en recouvrement de la première couche gaine 360. La couche guide peut être déposée par une technique de dépôt en phase vapeur et plus particulièrement une technique de dépôt en phase vapeur à basse pression, ou encore une technique de dépôt en phase vapeur activée par plasma. De manière alternative, la couche guide peut être déposée par une technique de dépôt physique en phase vapeur. La couche guide comprend avantageusement du nitrure de silicium.

Une étape de photolithographie est ensuite exécutée afin de définir un motif, et plus particulièrement le motif du deuxième guide d'onde 340 sur la couche guide. Enfin, la mise en œuvre d'une étape de gravure permet de former le deuxième guide d'onde 340 à partir du motif défini lors de l'étape de photolithographie. Ces aspects, bien connus de l'homme du métier, ne sont pas détaillés dans la présente invention.

Il est par ailleurs entendu que l'exécution de la sous-étape a3) conduit également à la formation du premier réseau de couplage 341 et du deuxième réseau de couplage 342 à partir de la couche guide. En d'autres termes, le deuxième guide d'onde 340, le premier réseau de couplage 341 et le deuxième réseau de couplage 342 reposent sur la première couche gaine 360 et sont faits du même matériau.

Enfin, la formation de la deuxième couche gaine 370, lors de l'exécution de la sous-étape a4), peut mettre en œuvre une technique de dépôt de couches. Notamment, la deuxième couche gaine 370 peut être déposée par une technique de dépôt en phase vapeur et plus particulièrement une technique de dépôt en phase vapeur à basse pression, ou encore une technique de dépôt en phase vapeur activée par plasma. De manière alternative, la deuxième couche gaine 370 peut être déposée par une technique de dépôt physique en phase vapeur.

Enfin, cette sous-étape a4) peut également mettre en œuvre un polissage (notamment un polissage mécano-chimique) destiné à ajuster l'épaisseur de la deuxième couche gaine 370. La deuxième couche gaine 370 peut comprendre du dioxyde de silicium.

La couche de couplage 300 est ainsi obtenue à l'issue de l'exécution des sous-étapes a1) à a4). La couche de couplage 300 comprend notamment, de sa face de couplage vers sa face d'assemblage, la couche d'oxyde enterré 440, la première couche gaine 360 et la deuxième couche gaine 370. La couche de couplage 300 comprend également le premier guide d'onde 330 et le deuxième guide d'onde 340. Notamment, le premier guide d'onde 330 est intercalé entre la couche d'oxyde enterré 440 et la première couche gaine 360, tandis que le deuxième guide d'onde 340 se trouve entre la première couche gaine 360 et la deuxième couche gaine 370.

L'épaisseur de la couche d'oxyde enterré 440 et celle de la première couche gaine 360 permettent d'ajuster la première distance D1 et la deuxième distance D2.

La couche de couplage 300 reposant sur le substrat initial peut ainsi être reportée sur une face principale 210 du substrat final 200.

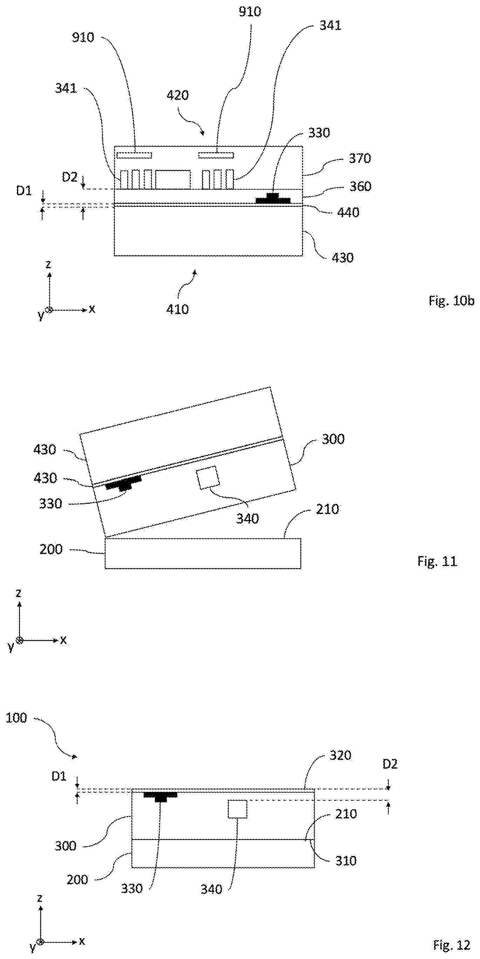

Ce report comprend notamment un assemblage d'une face d'assemblage de la couche de couplage 300 avec la face principale 210 du substrat final 200 (figure 11). L'assemblage peut notamment comprendre, sans toutefois limiter l'invention à ce seul aspect, un collage moléculaire.

L'assemblage peut être suivi d'une étape de retrait du substrat initial 430 de manière à transférer la couche de couplage 300 sur la face principale 210 (figure 12). Le retrait du substrat initial 430 peut comprendre un amincissement mécanique, un attaque chimique ou encore un combinaison des deux.

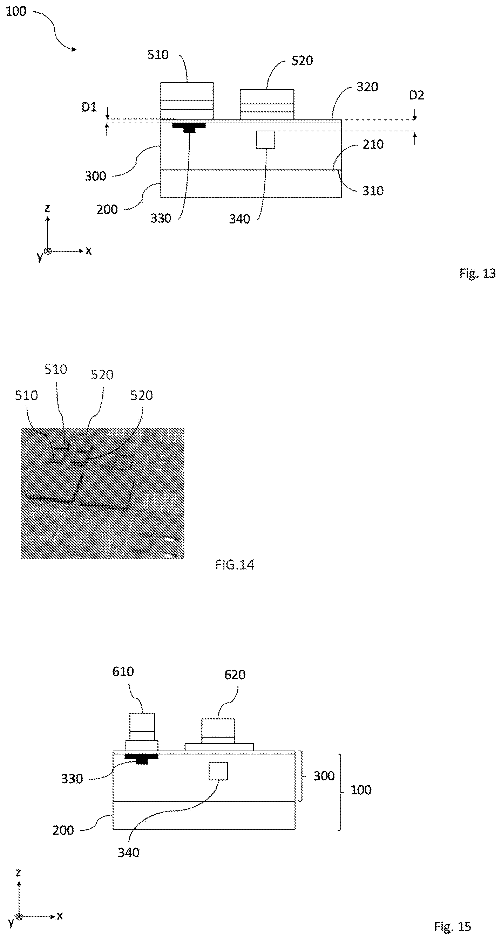

Le procédé selon la présente invention comprend également un étape b) de report (par assemblage et, plus particulièrement, par collage), sur la face de couplage, d'au moins un premier bloc 510 et d'au moins un deuxième bloc 520 faits, respectivement, d'un premier empilement photonique et d'un deuxième empilement photonique (figure 13).

Par « empilement photonique », on entend un empilement de couches de matériaux, notamment de couches de matériaux semi-conducteurs, susceptible d'émettre un rayonnement lumineux dès lors qu'il est soumis à un signal électrique, ou émettre un signal électrique dès lors qu'il absorbe un rayonnement lumineux.

Il est par ailleurs entendu, selon les termes de la présente invention, que dès lors qu'un empilement photonique est reporté sur la face de couplage, les couches de matériau le formant sont empilées selon la direction z.

Selon la présente invention, le premier bloc 510 et le deuxième bloc 520 forment chacun une vignette qui peut être reportée par un procédé de préhension/positionnement (« Pick and Place » selon la terminologie Anglo-Saxonne) et collage. La figure 14 qui représente des vignettes (premier bloc ou deuxième bloc) en est une illustration.

La formation du premier bloc 510 et du deuxième bloc 520 peut faire intervenir des étapes d'épitaxie, et notamment des étapes d'épitaxie sur un substrat, dit substrat germe.

Notamment, la formation du premier empilement 510 sur la face de couplage peut comprendre les étapes suivantes :
b11) une étape de formation, par épitaxie, du premier empilement photonique sur une face, dite face germe, d'un premier substrat germe ;
b12) une étape de découpe pour former des premières sections qui comprennent chacune une première portion du premier substrat germe sur laquelle repose une première vignette formée du premier empilement photonique ;
b13) une étape d'assemblage des premières vignettes sur la face de couplage ;
b14) une étape de retrait de la première portion à l'issue de l'étape b13) de manière à transférer la première vignette sur la face de couplage.

De manière équivalente, la formation du deuxième empilement sur la face de couplage peut comprendre les étapes suivantes :
b21) une étape de formation, par épitaxie, du deuxième empilement photonique sur une face, dite face germe, d'un deuxième substrat germe ;
b22) une étape de découpe pour former des deuxièmes sections qui comprennent chacune une deuxième portion du deuxième substrat germe sur laquelle repose une deuxième vignette formée du deuxième empilement photonique ;
b23) une étape d'assemblage des deuxièmes vignettes sur la face de couplage ;
b24) une étape de retrait de la deuxième portion à l'issue de l'étape c23) de manière à transférer la deuxième vignette sur la face de couplage.

Le procédé selon la présente invention comprend également une étape c) de formation à partir du premier bloc 510 et du deuxième bloc 520, respectivement, d'un premier 610 et d'un deuxième 620 composant photonique. L'étape c) peut notamment comprendre un enchainement d'étapes de photolithographie et de gravure destinées à mettre en forme le premier composant photonique et le deuxième composant photonique.

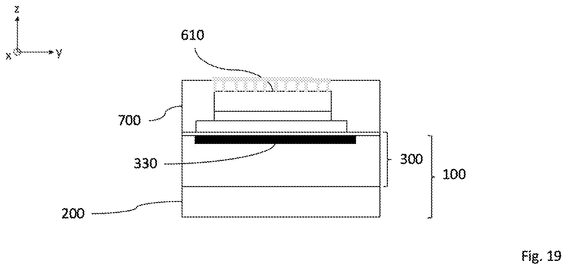

Ainsi, à l'issue de l'étape c), le premier composant photonique 610 est optiquement couplé avec le premier guide d'onde 330 selon un mode de couplage par ondes évanescentes ou adiabatique (figure 15, 19). En d'autres termes, un rayonnement lumineux guidé par le premier guide d'onde est susceptible d'être transféré vers le premier composant photonique 610. Il est entendu qu'un tel couplage optique, par ondes évanescentes ou adiabatique, est obtenu dès lors que le premier composant photonique est à proximité D1 du premier guide d'onde 330 et que les guides d'onde ont des indices proches. En d'autres termes, l'étape b) de report du premier bloc et l'étape c) sont exécutées de sorte que le premier composant optique 610 soit disposé à l'aplomb d'une section du premier guide d'onde 330.

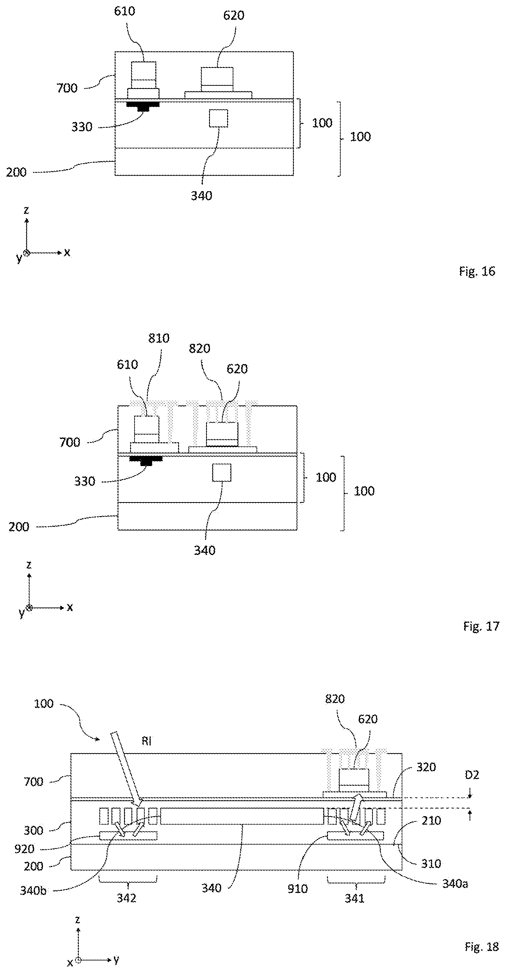

De manière équivalente, à l'issue de l'étape c), le deuxième composant photonique 620 est optiquement couplé avec le deuxième guide d'onde 340 via le premier réseau de couplage 341 (figure 15 et figure 18). En d'autres termes, un rayonnement lumineux guidé par le deuxième guide d'onde 340 est susceptible d'être transféré vers le deuxième composant photonique 620 via le premier réseau de couplage. Ainsi, l'étape b) de report du deuxième bloc et l'étape c) sont exécutées de sorte que le deuxième composant optique 620 soit disposé à l'aplomb du premier réseau de couplage 330.

Ainsi, tel que représenté à la figure 18, un rayonnement lumineux RI, incident par la face avant et à l'aplomb du deuxième réseau de couplage 342, est transmis audit deuxième réseau de couplage 342 pour ensuite être guidé par le deuxième guide d'onde de l'extrémité 340b vers l'extrémité 340a et atteindre le premier réseau de couplage 341. Dès lors qu'il atteint le premier réseau de couplage 341, le rayonnement est dirigé vers la face, dite inférieure, du deuxième composant optique, en contact avec la face de couplage 320.

La face inférieure peut néanmoins présenter un coefficient de réflectivité non nul, de sorte que le rayonnement dirigé vers ladite face soit en partie réfléchi par cette dernière.

Également, le rayonnement lumineux RI, lors de son interaction avec le deuxième réseau de couplage 342, peut, pour partie, traverser ce dernier sans être guidé en direction du deuxième guide d'onde 340.

Ces effets, non désirés, affectent directement l'efficacité du ou des couplages optiques.

La considération de couches anti-reflet afin de pallier ces effets indésirables n'est toutefois ni souhaitable, ni facile à mettre à en œuvre.

Ainsi, et tel qu'illustré à la figure 18, il est possible de prévoir la formation de deux éléments réflectifs 910 et 920 de manière à améliorer l'efficacité optique du dispositif.

Notamment, l'élément réflectif 910 est formé dans la couche de couplage 300, et est aménagé de sorte que le premier réseau de couplage se trouve intercalé entre ledit élément réflectif 910 et l'au moins un deuxième composant photonique 620.

De manière équivalente, l'élément réflectif 920 est formé dans la couche de couplage 300, et est aménagé de sorte que le deuxième réseau de couplage se trouve intercalé entre ledit élément réflectif 920 et la face de couplage.

Les éléments réflectifs 910 et 920 peuvent comprendre chacun un miroir de Bragg, et être formés lors de l'exécution de la sous-étape a2).

Cet agencement est particulièrement avantageux car il ne nécessite pas de mettre en œuvre un couche anti-réflective en recouvrement de la face optiquement active (la face inférieure) du deuxième composant photonique. En effet, dans l'exemple illustré en figure 18, l'élément réflecteur 910 permet de renvoyer vers la face inférieure du deuxième composant photonique 620 la portion de rayonnement réfléchie par ladite face.

De manière équivalente, le rayonnement lumineux traversant pour partie le deuxième réseau de couplage 342 peut être réinjecté dans ledit réseau par réflexion sur l'élément réflecteur 920.

Tel qu'illustré à la figure 10b, les éléments réflecteur 910 et 920 peuvent être formés lors de l'étape a4) de formation de la deuxième couche gaine 370. Notamment, l'étape a4) peut comprendre :
- la formation d'une première section de la deuxième couche gaine en recouvrement de la première couche gaine et du premier guide d'onde ;
- la formation des deux réflecteurs 910 et 920 sur la première section de la deuxième couche gaine ;
- la formation d'une deuxième section de la deuxième couche gaine en recouvrement des deux réflecteurs et de la première section de la deuxième couche gaine.

A titre d'exemple, le premier composant photonique peut comprendre un laser, et notamment un laser à base d'InP. L'empilement photonique permettant de former un laser à base d'InP comprend notamment un couche d'InP dopé P et une couche d'InP dopé N et entre lesquelles se trouve intercalé un ensemble de puits quantiques.

Le couplage par ondes évanescentes ou adiabatique d'un premier guide d'onde, fait par exemple de silicium monocristallin, et à proximité du premier composant photonique est relativement efficace. La proximité des indices de réfraction, dans le domaine des longueurs d'ondes comprises entre 1310 nm et 1550 nm, du silicium monocristallin formant le premier guide d'onde et l'InP formant le premier composant photonique, ainsi que la proximité (distance D1 inférieure ou égale à 150 nm) de ces deux éléments rend le couplage par ondes évanescentes ou adiabatique particulièrement efficace.

Le deuxième composant photonique peut comprendre une photodiode à avalanche. En particulier, la photodiode à avalanche peut reprendre les termes de la photodiode présentée dans le document [4] cité à la fin de la description.

Une couche d'encapsulation 700 en recouvrement du premier composant photonique 610 et du deuxième composant photonique 620 peut être formée (figure 16). La couche d'encapsulation 700 peut comprendre un matériau isolant, et notamment du dioxyde de silicium. La formation de la couche d'encapsulation 700 est à la portée de l'homme du métier, et n'est donc pas décrite dans la présente description.

La formation de la couche d'encapsulation 700 peut être suivie de la formation de premiers contacts 810, associés au premier composant photonique 610, et de deuxièmes contacts 820 associés au deuxième composant photonique 620 (figure 17). Les premiers 810 et les deuxièmes 820 contacts sont notamment destinés à permettre le contrôle électrique, respectivement, du premier composant photonique 610 et du deuxième composant photonique 620.

La formation des contacts 810 et 820 est à la portée de l'homme du métier, et n'est donc pas décrite dans la présente description.

Notamment, le procédé, tel que décrit ci-avant, permet d'enterrer différents guides d'onde à des profondeur différentes. Cette configuration est particulièrement avantageuse dès lors que des composants optiques nécessitant des couplages optiques différents doivent être intégrés à un même dispositif.

De manière particulièrement avantageuse, la couche de couplage 300 est formée de sorte que la première distance D1 soit inférieure ou égale à 150 nm (et non nulle). Une telle distance permet d'établir un couplage par ondes évanescente ou adiabatique entre le premier guide d'onde et le premier composant optique.

Toujours de manière particulièrement avantageuse, la couche de couplage 300 est formée de sorte que la deuxième distance D2 soit supérieure à 200 nm. Une telle distance permet d'établir un couplage entre le deuxième guide d'onde et le deuxième composant photonique via le réseau de couplage tout en limitant (voire prévenant) un couplage par ondes évanescente ou adiabatique.

La mise en œuvre de éléments réflectifs 910 et 920 permet d'améliorer l'efficacité du couplage optique entre le deuxième guide d'onde et le deuxième composant photonique, et ce notamment sans avoir recours à la mise en œuvre de couches antireflets sur la face inférieure du deuxième composant photonique.

Enfin, le procédé selon la présente invention permet de considérer un premier guide d'onde fait d'un matériau semi-conducteur monocristallin à une distance D1 de la face de couplage inférieure à la distance D2 à laquelle se trouve le deuxième guide d'onde.

L'invention concerne également un dispositif photonique selon la revendication indépendante 11 et les revendications dépendantes 12 à 13 qui reprend pour l'essentiel les caractéristiques présentées ci-avant.

Bien sûr, l'invention n'est pas limitée aux modes de réalisation décrits et on peut y apporter des variantes de réalisation sans sortir du cadre de l'invention tel que défini par les revendications.

### RÉFÉRENCES

[1] G. Roelkens, J. Brouckaert, D. Taillaert, P. Dumon, W. Bogaerts, D. Van Thourhout, R. Baets, R. Nötzel, and M. Smit, « Integration of InPlInGaAsP photodetectors onto silicon-on-insulator waveguide circuits », Opt. Express 13, 10102-10108 (2005) ;
[2] Zhihong Huang, Cheng Li, Di Liang, Kunzhi Yu, Charles Santori, Marco Fiorentino, Wayne Sorin, Samuel Palermo, and Raymond G. Beausoleil, « 25 Gbps low-voltage waveguide Si-Ge avalanche photodiode », Optica 3, 793-798 (2016) ;
[3] L. Vivien, et al., "Zero-bias 40Gbit/s germanium waveguide photodetector on silicon", Optics Express, vol. 20. (2), Nov. 2011;
[4] Liu, J.-J. et al., "The Fabrication and Characterization of InAlAs/InGaAs APDs Based on a Mesa-Structure with Polyimide Passivation", Sensors 2019, 19, 3399;
[5] EP3764136A1;
[6] US2004/081399A1.

## Revendications

1. Procédé de fabrication d'un dispositif photonique (100) qui comprend les étapes successives suivantes :
a) une étape de fourniture d'une structure support qui comprend une couche de couplage (300) pourvue d'une face de couplage (320) et d'une face d'assemblage (310), opposée à la face de couplage (320), la couche de couplage (300) reposant, par sa face d'assemblage (310), sur une face principale (210) d'un substrat final (200), la couche de couplage (300) comprenant au moins un premier guide d'onde (330) et au moins un deuxième guide d'onde (340), terminé par une de ses extrémités par un premier réseau de couplage (341), le premier guide d'onde comprenant un matériau monocristallin, le premier (330) et le deuxième (340) guide d'onde étant distants de la face de couplage (320), respectivement, d'une première distance D1 et d'une deuxième distance D2, supérieure à la première distance D1, avantageusement la première distance D1 est inférieure à 150 nm et la deuxième distance D2 est supérieure à 200 nm, la fourniture de la structure support comprenant la formation de la couche de couplage à partir d'un substrat de semi-conducteur sur isolant (400), puis le report de la couche de couplage sur la face principale du substrat final (200), le deuxième guide d'onde (340) est également terminé selon son autre extrémité par un deuxième réseau de couplage, et le deuxième réseau de couplage étant agencé pour permettre l'injection d'un rayonnement lumineux dans le deuxième guide d'onde (340) à partir de la face de couplage ;
b) une étape de report, sur la face de couplage (320), d'au moins un premier (510) et d'au moins un deuxième (520) bloc faits, respectivement, d'un premier et d'un deuxième empilement photonique ;
c) une étape de formation à partir du premier bloc (510) et du deuxième bloc (520), respectivement, d'un premier (610) et d'un deuxième (620) composant photonique optiquement couplés, respectivement, avec l'au moins un premier guide d'onde (330) de manière évanescente ou adiabatique, et avec l'au moins un deuxième guide d'onde (340) via le premier réseau de couplage (341).

2. Procédé de fabrication selon la revendication 1, dans lequelle substrat de semi-conducteur sur isolant (400) comprend, d'une face arrière (410) vers une face avant (420), un substrat initial (430), une couche d'oxyde enterré (440) et une couche de semi-conducteur (450), la couche d'oxyde enterré (440), formant pour partie la couche de couplage (300), et présentant avantageusement une épaisseur égale à la première distance D1.

3. Procédé de fabrication selon la revendication 2, dans lequel la formation de la couche de couplage (300) comprend une sous-étape a1) de gravure partielle de la couche de semi-conducteur (450) de manière à former l'au moins un premier guide d'onde (330).

4. Procédé de fabrication selon la revendication 3, dans lequel la formation de la couche de couplage (300) comprend une sous-étape a2) de formation d'une première couche gaine (360), avantageusement en dioxyde de silicium, en recouvrement de la face avant du substrat de semi-conducteur sur isolant et destinée à encapsuler le premier guide d'onde (330).

5. Procédé de fabrication selon la revendication 4, dans lequel la formation de la couche de couplage (300) comprend une sous-étape a3) de formation du deuxième guide d'onde (340) et du premier réseau de couplage (341) sur la première couche gaine (360), avantageusement l'épaisseur de la première couche gaine (360) est ajustée de sorte que le deuxième guide d'onde (340) et le premier réseau de couplage (341) soient à une distance d'une interface, formée entre le substrat initial (430) et la couche d'oxyde enterré (440), égale à la deuxième distance D2.

6. Procédé de fabrication selon la revendication 5, dans lequel la formation de la couche de couplage (300) comprend une sous-étape a4) de formation d'une deuxième couche gaine (370), avantageusement en dioxyde de silicium, en recouvrement de la première couche gaine (360) et destinée à encapsuler le deuxième guide d'onde (340) et le premier réseau de couplage (341).

7. Procédé de fabrication selon l'une des revendications 1 à 6, dans lequel le premier empilement photonique et le deuxième empilement photonique sont formés par épitaxie avant d'être reportés sur la face de couplage (320).

8. Procédé selon l'une des revendications 1 à 7, dans lequel l'au moins un premier composant photonique comprend un laser.

9. Procédé selon l'une des revendications 1 à 8, dans lequel l'au moins un deuxième composant photonique comprend une photodiode à avalanche, avantageusement, l'interface formée entre le deuxième empilement photonique et la couche de couplage (300) est dépourvue de couche antireflet.

10. Procédé selon l'une des revendications 1 à 9, dans lequel un élément réflectif (910) est formé dans la couche de couplage (300), et est aménagé de sorte que le premier réseau de couplage (341) se trouve intercalé entre ledit élément réflectif (910) et l'au moins un deuxième composant photonique.

11. Dispositif photonique (100) qui comprend :
- un substrat final (200) pourvu d'une face principale (210) ;
- une couche de couplage (300) pourvue d'une face de couplage (320) et d'une face d'assemblage (310), opposée à la face de couplage (320), la couche de couplage (300) reposant, par sa face d'assemblage (310), sur la face principale (210) du substrat final (200), la couche de couplage (300) comprenant au moins un premier guide d'onde (330) et au moins un deuxième guide d'onde (340), terminé par une de ses extrémités par un premier réseau de couplage (341), le premier guide d'onde comprend un matériau semi-conducteur monocristallin, le premier guide d'onde (330) et le deuxième guide d'onde (340) étant distants de la face de couplage (320), respectivement, d'une première distance D1 et d'une deuxième distance D2, supérieure à la première distance D1, avantageusement la première distance D1 est inférieure à 150 nm et la deuxième distance D2 est supérieure à 200 nm ;
- un premier (610) et un deuxième (620) composant photoniques formés respectivement d'un premier et d'un deuxième empilement photonique, le premier (610) et le deuxième (620) composant photonique étant optiquement couplés, respectivement, avec l'au moins un premier guide d'onde (330) de manière évanescente ou adiabatique, et avec l'au moins un deuxième guide d'onde (340) via le premier réseau de couplage (341) ; le deuxième guide d'onde (340) est également terminé selon son autre extrémité par un deuxième réseau de couplage (342), et le deuxième réseau de couplage (342) étant agencé pour permettre l'injection d'un rayonnement lumineux dans le deuxième guide d'onde (340) à partir de la face de couplage.

12. Dispositif selon la revendication 12, dans lequel le deuxième composant photonique comprend une photodiode à avalanche, avantageusement l'interface formée entre le deuxième empilement photonique et la couche de couplage (300) est dépourvue de couche antireflet.

13. Dispositif selon la revendication 11 ou 12 dans lequel ledit dispositif comprend en outre un élément réflectif (910) formé dans la couche de couplage (300), et agencé de sorte que le premier réseau de couplage (341) se trouve intercalé entre ledit élément réflectif (910) et l'au moins un deuxième composant photonique (620).

## Patentansprüche

1. Verfahren zum Herstellen einer photonischen Vorrichtung (100), das die folgenden aufeinanderfolgenden Schritte umfasst:
a) einen Schritt des Bereitstellens einer Trägerstruktur, die eine Kopplungsschicht (300) umfasst, die mit einer Kopplungsfläche (320) und einer der Kopplungsfläche (320) gegenüberliegenden Montagefläche (310) versehen ist, wobei die Kopplungsschicht (300) durch ihre Montagefläche (310) auf einer Hauptfläche (210) eines Endsubstrats (200) aufliegt, wobei die Kopplungsschicht (300) mindestens einen ersten Wellenleiter (330) und mindestens einen zweiten Wellenleiter (340) umfasst, der an einem seiner Enden durch ein erstes Kopplungsnetz (341) abgeschlossen ist, wobei der erste Wellenleiter ein monokristallines Material umfasst, wobei der erste (330) und der zweite (340) Wellenleiter von der Kopplungsfläche (320) jeweils um einen ersten Abstand D1 und einen zweiten Abstand D2, der größer als der erste Abstand D1 ist, beabstandet sind, wobei vorteilhafterweise der erste Abstand D1 kleiner ist als 150 nm und der zweite Abstand D2 größer ist als 200 nm, wobei das Bereitstellen der Trägerstruktur das Bilden der Kopplungsschicht aus einem Halbleiter-auf-Isolator-Substrat (400) und das anschließende Übertragen der Kopplungsschicht auf die Hauptfläche des Endsubstrats (200) umfasst, wobei der zweite Wellenleiter (340) an seinem anderen Ende ebenfalls durch ein zweites Kopplungsnetz abgeschlossen ist, und das zweite Kopplungsnetz so angeordnet ist, dass es ermöglicht, von der Kopplungsfläche aus eine Lichtstrahlung in den zweiten Wellenleiter (340) einzuspeisen;
b) einen Schritt des Übertragens von mindestens einem ersten (510) und mindestens einem zweiten (520) Block, die jeweils aus einem ersten und einem zweiten Photonenstapel bestehen, auf die Kopplungsfläche (320);
c) einen Schritt des Bildens aus dem ersten Block (510) und dem zweiten Block (520) jeweils einer ersten (610) und einer zweiten (620) photonischen Komponente, die jeweils mit dem mindestens einen ersten Wellenleiter (330) evaneszent oder adiabatisch und mit dem mindestens einen zweiten Wellenleiter (340) über das erste Kopplungsnetz (341) optisch gekoppelt sind.

2. Herstellungsverfahren nach Anspruch 1, wobei das Halbleiter-auf-Isolator-Substrat (400) von einer Rückseite (410) zu einer Vorderseite (420) ein Anfangssubstrat (430), eine vergrabene Oxidschicht (440) und eine Halbleiterschicht (450) umfasst, wobei die vergrabene Oxidschicht (440) teilweise die
Kopplungsschicht (300) bildet und vorteilhafterweise eine Dicke aufweist, die dem ersten Abstand D1 entspricht.

3. Herstellungsverfahren nach Anspruch 2, wobei das Bilden der Kopplungsschicht (300) einen Unterschritt al) des teilweisen Ätzens der Halbleiterschicht (450) umfasst, um den mindestens einen ersten Wellenleiter (330) zu bilden.

4. Herstellungsverfahren nach Anspruch 3, wobei das Bilden der Kopplungsschicht (300) einen Unterschritt a2) des Bildens einer ersten Hüllschicht (360), vorteilhafterweise aus Siliziumdioxid, umfasst, die die Vorderseite des Halbleiter-auf-Isolator-Substrats abdeckt und dazu bestimmt ist, den ersten Wellenleiter (330) zu umhüllen.

5. Herstellungsverfahren nach Anspruch 4, wobei das Bilden der Kopplungsschicht (300) einen Unterschritt a3) des Bildens des zweiten Wellenleiters (340) und des ersten Kopplungsnetzes (341) auf der ersten Hüllschicht (360) umfasst, wobei vorteilhafterweise die Dicke der ersten Hüllschicht (360) so eingestellt ist, dass der zweite Wellenleiter (340) und das erste Kopplungsnetz (341) einen Abstand von einer zwischen dem Anfangssubstrat (430) und der vergrabenen Oxidschicht (440) gebildeten Schnittstelle haben, der dem zweiten Abstand D2 entspricht.

6. Herstellungsverfahren nach Anspruch 5, wobei das Bilden der Kopplungsschicht (300) einen Unterschritt a4) des Bildens einer zweiten Hüllschicht (370), vorteilhafterweise aus Siliziumdioxid, umfasst, die die erste Hüllschicht (360) abdeckt und dazu bestimmt ist, den zweiten Wellenleiter (340) und das erste Kopplungsnetz (341) zu umhüllen.

7. Herstellungsverfahren nach einem der Ansprüche 1 bis 6, wobei der erste Photonenstapel und der zweite Photonenstapel durch Epitaxie gebildet werden, bevor sie auf die Kopplungsfläche (320) übertragen werden.

8. Verfahren nach einem der Ansprüche 1 bis 7, wobei die mindestens eine erste photonische Komponente einen Laser umfasst.

9. Verfahren nach einem der Ansprüche 1 bis 8, wobei die mindestens eine zweite photonische Komponente eine Avalanche-Fotodiode umfasst, wobei vorteilhafterweise die zwischen dem zweiten Photonenstapel und der Kopplungsschicht (300) gebildete Schnittstelle keine Antireflexschicht aufweist.

10. Verfahren nach einem der Ansprüche 1 bis 9, wobei ein reflektierendes Element (910) in der Kopplungsschicht (300) ausgebildet und so angeordnet ist, dass sich das erste Kopplungsnetz (341) zwischen dem reflektierenden Element (910) und der mindestens einen zweiten photonischen Komponente befindet.

11. Photonische Vorrichtung (100), die Folgendes umfasst:
- ein Endsubstrat (200), das mit einer Hauptfläche (210) versehen ist;
- eine Kopplungsschicht (300), die mit einer Kopplungsfläche (320) und einer der Kopplungsfläche (320) gegenüberliegenden Montagefläche (310) versehen ist, wobei die Kopplungsschicht (300) durch ihre Montagefläche (310) auf der Hauptfläche (210) des Endsubstrats (200) aufliegt, wobei die Kopplungsschicht (300) mindestens einen ersten Wellenleiter (330) und mindestens einen zweiten Wellenleiter (340) umfasst, der mit einem seiner Enden durch ein erstes Kopplungsnetz (341) abgeschlossen ist, wobei der erste Wellenleiter ein monokristallines Halbleitermaterial umfasst, wobei der erste Wellenleiter (330) und der zweite Wellenleiter (340) von der Kopplungsfläche (320) jeweils um einen ersten Abstand D1 und einen zweiten Abstand D2, der größer als der erste Abstand D1 ist, beabstandet sind, wobei vorteilhafterweise der erste Abstand D1 kleiner ist als 150 nm und der zweite Abstand D2 größer ist als 200 nm;
- eine erste (610) und eine zweite (620) photonische Komponente, die jeweils aus einem ersten und einem zweiten Photonenstapel gebildet sind, wobei die erste (610) und die zweite (620) photonische Komponente jeweils mit dem mindestens einen ersten Wellenleiter (330) evaneszent oder adiabatisch und mit dem mindestens einen zweiten Wellenleiter (340) über das erste Kopplungsnetz (341) optisch gekoppelt sind; wobei der zweite Wellenleiter (340) an seinem anderen Ende ebenfalls durch ein zweites Kopplungsnetz (342) abgeschlossen ist, und das zweite Kopplungsnetz (342) so angeordnet ist, dass es ermöglicht, von der Kopplungsfläche aus eine Lichtstrahlung in den zweiten Wellenleiter (340) einzuspeisen.

12. Vorrichtung nach Anspruch 12, wobei die zweite photonische Komponente eine Avalanche-Fotodiode umfasst, wobei vorteilhafterweise die zwischen dem zweiten Photonenstapel und der Kopplungsschicht (300) gebildete Schnittstelle keine Antireflexschicht aufweist.

13. Vorrichtung nach Anspruch 11 oder 12, wobei die Vorrichtung ferner ein in der Kopplungsschicht (300) ausgebildetes reflektierendes Element (910) umfasst, das so angeordnet ist, dass sich das erste Kopplungsnetz (341) zwischen dem reflektierenden Element (910) und der mindestens zweiten photonischen Komponente (620) befindet.

## Claims

1. Method for manufacturing a photonic device (100) which comprises the following successive steps
a) a step of providing a support structure which comprises a coupling layer 5 (300) provided with a coupling face (320) and with an assembly face (310), opposite to the coupling face (320), the coupling layer (300) resting, by its assembly face (310), on a main face (210) of a final substrate (200), the coupling layer (300) comprising at least one first waveguide (330) and at least one second waveguide (340), terminated at one of its ends in a first coupling grating (341), the first waveguide comprising a monocrystalline material, the first (330) and the second (340) waveguide being distant from the coupling face (320), respectively, by a first distance D1 and a second distance D2, larger than the first distance D1, advantageously the first distance D1 is smaller than 150 nm and the second distance D2 is larger than 200 nm, providing the support structure comprising forming the coupling layer starting from a semiconductor-on-insulator substrate (400), then transferring the coupling layer to the main face of the final substrate (200), the second waveguide (340) also terminates according to its other end in a second coupling grating, and the second coupling grating being arranged to enable the injection of a light radiation into the second waveguide (340) starting from the coupling face;
b) a step of transferring, onto the coupling face (320), at least one first (510) and at least one second (520) block made, respectively, of a first and a second photonic stack;
c) a step of forming, starting from the first block (510) and from the second block (520), respectively, a first (610) and a second (620) photonic component optically coupled, respectively, with the at least one first waveguide (330) in an evanescent or adiabatic manner, and with the at least one second waveguide (340) via the first coupling grating (341).

2. Manufacturing method according to claim 1, wherein the semiconductor-on-insulator substrate (400) comprises, from a rear face (410) to a front face (420), an initial substrate (430), a buried oxide layer (440) and a semiconductor layer (450), the buried oxide layer (440), forming in part the coupling layer (300), and advantageously having a thickness equal to the first distance D1.

3. Manufacturing method according to claim 2, wherein forming the coupling layer (300) comprises a sub-step al) of partially etching the semiconductor layer (450) so as to form the at least one first waveguide (330).

4. Manufacturing method according to claim 3, wherein the formation of the coupling layer (300) comprises a sub-step a2) of forming a first sheath layer (360), advantageously made of silicon dioxide, as a covering of the front face of the semiconductor substrate on insulator and intended to encapsulate the first waveguide (330).

5. Manufacturing method according to claim 4, wherein forming the coupling layer (300) comprises a sub-step a3) of forming the second waveguide (340) and the first coupling grating (341) over the first sheath layer (360), advantageously the thickness of the first sheath layer (360) is adjusted so that the second waveguide (340) and the first coupling grating (341) are at a distance from an interface, formed between the initial substrate (430) and the buried oxide layer (440), equal to the second distance D2.

6. Manufacturing method according to claim 5, wherein forming the coupling layer (300) comprises a sub-step a4) of forming a second sheath layer (370), advantageously made of silicon dioxide, as a covering of the first sheath layer (360) and intended to encapsulate the second waveguide (340) and the first coupling grating (341).

7. Manufacturing method according to one of claims 1 to 6, wherein the first photonic stack and the second photonic stack are formed by epitaxy before being transferred to the coupling face (320).

8. Method according to one of claims 1 to 7, wherein the at least one first photonic component comprises a laser.

9. Method according to one of claims 1 to 8, wherein the at least one second photonic component comprises an avalanche photodiode, advantageously,
the interface formed between the second photonic stack and the coupling layer (300) is devoid of an anti-reflective layer.

10. Method according to one of claims 1 to 9, wherein a reflective element (910) is formed in the coupling layer (300), and is arranged so that the first coupling grating (341) is interposed between said reflective element (910) and the at least one second photonic component.

11. Photonic device (100) which comprises:
- a final substrate (200) provided with a main face (210);
- a coupling layer (300) provided with a coupling face (320) and an assembly face (310) opposite to the coupling face (320), the coupling layer (300) resting, by its assembly face (310), on the main face (210) of the final substrate (200), the coupling layer (300) comprising at least one first waveguide (330) and at least one second waveguide (340), terminated at one of its ends in a first coupling grating (341), the first waveguide comprises a monocrystalline semiconductor, the first waveguide (330) and the second waveguide (340) being distant from the coupling face (320), respectively, by a first distance D1 and by a second distance D2, larger than the first distance D1, advantageously the first distance D1 is smaller than 150 nm and the second distance D2 is larger than 200 nm;
- a first (610) and a second (620) photonic component formed respectively of a first and a second photonic stack, the first (610) and the second (620) photonic component being optically coupled, respectively, with the at least one first waveguide (330) in an evanescent or adiabatic manner, and with the at least one second waveguide (340) via the first coupling grating (341); the second waveguide (340) is also terminated according to its other end in a second coupling grating (342), and the second coupling grating (342) being arranged to enable the injection of a light radiation into the second waveguide (340) starting from the coupling face.

12. Device according to claim 12, wherein the second photonic component comprises an avalanche photodiode, advantageously the interface formed between the second photonic stack and the coupling layer (300) is devoid of any anti-reflective layer.

13. Device according to claim 11 or 12, wherein said device further comprises a reflective element (910) formed in the coupling layer (300), and arranged so that the first coupling grating (341) is interposed between said reflective element (910) and the at least one second photonic component (620).
